# EUROPÄISCHE PATENTSCHRIFT

(11) **EP 0 743 001 B1**
(45) Veröffentlichungstag und Bekanntmachung des Hinweises auf die Patenterteilung: **08.03.2000**
(21) Anmeldenummer: 96107895.3
(22) Anmeldetag: 17.05.1996
(51) Int. Cl.: A01M 7/00

(54) **Vorrichtung und Verfahren zum Besprühen von Raumkulturen**
Device and process for spraying large crops
Dispositif et procédé de pulvérisation de cultures étendus

(30) Priorität: 17.05.1995 DE 19518058
(43) Veröffentlichungstag der Anmeldung: 20.11.1996
(73) Patentinhaber: M. Jacoby GmbH & Co. KG Maschinenfabrik, 54523 Hetzerath (DE)
(72) Erfinder: Göhlich, Horst, 14109 Berlin (DE); Kümmel, Knut, 12307 Berlin (DE)
(74) Vertreter: Schmid, Rudolf, Dipl.-Ing., Patentanwalt

(56) Entgegenhaltungen:
- DE-A- 3 900 221
- DE-A- 3 900 223
- US-A- 4 768 713
- US-A- 5 222 324
- US-A- 5 278 423

## Beschreibung

Die Erfindung betrifft eine Vorrichtung zum Besprühen von Raumkulturen mit den Merkmalen des Oberbegriffs des Anspruchs 1 und ein Verfahren zum Besprühen von Raumkulturen mit den Merkmalen des Oberbegriffs des Anspruchs 17.

Vorrichtungen zum Besprühen von Raumkulturen sollen eine konstante Menge an Sprühmittel, wie z. B. Pflanzenschutz- oder Düngemittel auf jede Einheit Belaubungsoberfläche der die Raumkulturen bildenden Pflanzen aufbringen. Ein gebräuchliches Verfahren ist, die Geschwindigkeit des Fahrzeugs zum Besprühen der Raumkulturen zu messen, und die Abgabe der Sprühmittel der Geschwindigkeit dieses Fahrzeugs anzupassen. Dieses gebräuchliche Verfahren geht davon aus, daß die Belaubungsoberflächen entlang der Höhen und Breiten der Raumkulturen konstant sind. Sprühmittel wird unter dieser Annahme in unveränderter Menge auch ausgebracht, wo Belaubungsoberfläche nicht oder nur in geringer Dichte vorhanden ist, so daß Sprühmittel ohne Nutzen und unter Belastung der Umwelt ausgebracht wird.

Eine Vorrichtung zum Besprühen von Pflanzen, die verbesserte Einsatzmöglichkeiten und reduzierten Verbrauch an Sprühlösung erreichen soll, ist in der DE-C 39 00 221 offenbart. Gemäß diesem Stand der Technik ist eine fahrbare Sprühvorrichtung, die von einer Zugvorrichtung bewegt wird, mit einer Vielzahl von Ultraschallwandlern ausgestattet, die das Vorhandensein oder Nichtvorhandensein von Pflanzen in einer Raumkultur erfassen. Von den Ultraschallwandlern gehen Signale an einen Rechner, der eines einer Vielzahl von Ventilen entsprechend den Ultraschallwandlern, welche ein "Pflanze vorhanden" Signal an den Rechner gesandt haben, öffnet, so daß eine Pumpe Sprühlösung durch Düsen abgeben kann, die von diesen Ventilen gesteuert sind. Ein Geschwindigkeitssensor erfaßt die Geschwindigkeit der Sprühvorrichtung und stellt das Volumen der Sprühlösung ein, um eine vorbestimmte Abdeckdichte für Pflanzen zu schaffen. Sprühdichte und andere Parameter können von einer Bedienperson ausgewählt werden. Nachteilig bei der Vorrichtung zum Besprühen von Pflanzen gemäß diesem Stand der Technik ist es, daß Ultraschallsignale bei Fahrgeschwindigkeiten der Sprühvorrichtung von z. B. mehr als 5 km/h nicht ausreichend genau erfaßt werden können und überdies bei feuchten und benetzten Oberflächen oder durch Luftbewegungen infolge Wind oder Thermik verfälscht werden. Nachteilig ist auch, daß die nebeneinander angeordneten Ultraschallsensoren sich übersprechen.

Aus der DE-C 39 00223 ist es bekannt, vertikal übereinander angeordnete Ultraschallsensoren einer Vorrichtung zum Besprühen von Pflanzen in einer Raumkultur zur Vermeidung gegenseitigen Übersprechens nacheinander durch einen Multiplexer anzusteuern, so daß immer nur ein Ultraschallsensor aktiv ist, während die fahrbare Sprühvorrichtung eine bestimmte Wegstrecke 1 zurücklegt. Bei einer Anzahl von n Ultraschallsensoren legt die fahrbare Sprühvorrichtung eine Wegstrecke (n - 1) × l zurück, bevor in einer Höhe erneut ein Signal gemessen wird. In einer Höhe der Raumkultur sind Lücken, deren Längen kleiner oder gleich der Wegstrecke (n - 1) × l sind, so nicht erkennbar. Bei Weinkulturen z. B., die im Wuchs durchbrochen und verzweigt sind, und deren Vegetation sich im Lauf einer Wachstumsperiode stark ändert, können sich abhängig von der Anbindung der Triebe Lücken ergeben, die mit Ultraschallsensoren gemäß dem genannten Stand der Technik auf Grund mangelnder Fokussierbarkeit nicht erfaßt werden können und daher würde mit einer Vorrichtung zum Besprühen von Pflanzen gemäß dem genannten Stand der Technik beim Besprühen der Pflanzen nutzlos teures Sprühmittel ausgegeben, das die Umwelt belastet.

Die US-5 278 423 offenbart ein Gerät zur Zielerfassung und ein Verfahren zur Steuerung für eine Vorrichtung zum Besprühen von Raumkulturen mit einem gepulsten Laser. Ein einzelner Lasersensor bestimmt das Vorhandensein von Bewuchs in vorbestimmten Sprühzonen und steuert die Sprüheinrichtungen selektiv nur auf die Zonen mit Bewuchs. Daten zu Weiten und Abständen werden erfaßt und in einen Mikroprozessor geladen. Nachteilig bei diesem Gerät ist die Meßerfassung mit geringer Auflösung bei nur einem Sensor und die Montage des Sensors in starrer Verbindung mit den Sprüheinrichtungen auf einem Anhänger.

Aufgabe der Erfindung ist es, eine verbesserte Vorrichtung und ein verbessertes Verfahren zum Besprühen von Raumkulturen zu schaffen, deren unterschiedlicher Bewuchs berücksichtigt wird, so daß bei verbessertem Nutzeffekt weniger Sprühmittel gezielt auf die Raumkulturen ausgegeben wird.

Die Lösung erfolgt mit einer Vorrichtung zum Besprühen von Raumkulturen mit den Merkmalen des Anspruchs 1 und einem Verfahren zum Besprühen von Raumkulturen mit den Merkmalen des Anspruchs 17.

Die Vorrichtung zum Besprühen von Raumkulturen, insbesondere von Wein- und Obstkulturen, gemäß der Erfindung vermeidet die bei Verfahren nach dem Stand der Technik auftretenden Verluste durch zielorientierte Applikation von Sprühmittel auf die Pflanzen, die die Raumkultur bilden. Ein Zugfahrzeug, oder im Falle, daß es sich um einen gezogenen Anhänger handelt, das mit einer Geschwindigkeitsmeßvorrichtung ausgestattet ist, zieht einen Vorratsbehälter für Sprühmittel parallel entlang einer befahrbaren Strecke an den Raumkulturen vorbei. Ventile steuern die Abgabe von Sprühmittel durch regulierbare Sprüheinrichtungen, wie z. B. Düsen, die auf gegenüberliegenden Seiten an Rahmen vertikal übereinander angeordnet sind. Sensoren sind in Richtung der Strecke vor den Ventilen vertikal übereinander angeordnet und können Signale abgeben und aufnehmen, um Belaubungsoberflächen entlang der Raumkulturen berührungslos zu erfassen. Ein Rechner, der mit den Sensoren und den Ventilen verbunden ist, wertet die abgegebenen und aufgenommenen Signale der Sensoren aus und steuert die Ventile. Jeder einzelnen Sprüheinrichtung für das Besprühen eines Höhenabschnitts an der Raumkultur kann ein Ventil vorgeschaltet und ein Sensor zugeordnet sein. Gemäß der Erfindung sind die Sensoren am Zugfahrzeug in einer Dreipunktaufnahme annähernd parallel zu Belaubungsoberflächen der parallelen Raumkulturen angeordnet, so daß sich die Sensoren gleichsinnig zu den Sprüheinrichtungen bewegen, die z. B. in einem Anhängegerät angeordnet sind. Die Anbringung der Sensoren in der Dreipunktaufnahme mit einem Koppelrahmen minimiert die erheblichen Wankbewegungen, die bei Schmalspurfahrzeugen bei der Fahrt im unebenen Gelände bei unterschiedlichen Bodenunebenheiten in den Reifenspuren insbesondere dann auftreten, wenn fortwährend dieselbe Fahrspur in Wein-, Obst- und Hopfenanlagen befahren wird. Die Wankbewegungen bewirken eine Vertikalverlagerung der Abtastzonen der Sensoren und der Sprühbereiche der Sprüheinrichtungen an den Belaubungsoberflächen der Pflanzenzeilen. Bei Anhängegebläsesprühgeräten liegen die Sprüheinrichtungen in der Regel hinter der Anhängerachse. Bei gleichem Abstand zwischen Schlepperhinterachse und Ebene der Sensoren sowie Anhängerachse und Ebene der Sprüheinrichtungen erfahren die Strahlkegel der Sprüheinrichtungen an den Belaubungsoberflächen eine qualitativ gleiche Vertikalverlagerung infolge Fahrzeugwankbewegung wie die Abtastkegel der Sensoren an den Belaubungsoberflächen. Die erfindungsgemäße Vorrichtung ist besonders vorteilhaft gegenüber dem genannten Stand der Technik, bei dem Sensoren vor und hinter der Anhängerachse fest angebracht sind und sich die Strahlkegel der Sprüheinrichtungen wie die Abtastkegel der Sensoren gleichzeitig und gleichsinnig bewegen, was aber durch den Abstand zwischen Ebene der Sensoren und Ebene der Sprüheinrichtungen zu Vertikalbewegungen an den Belaubungsoberflächen an unterschiedlichen Positionen entlang der Fahrspur führt. Von den Sensoren werden optische Signale abgegeben und aufgenommen, die aufgrund der kürzeren Wellenlänge des Lichts gegenüber der Länge von Schallwellen eine deutlich höhere Auflösung der Belaubungsoberflächen der Raumkulturen erreichen, so daß insbesondere lokale Lücken in Reihenkulturen, wie z. B. Wein-, Obstbau-, Hopfenanlagen, bei Bananen, Citrus, Kaffee, Tee und Strauchobst erfaßt und berücksichtigt werden können.

Gemäß der Erfindung ist eine Meßeinrichtung vorgesehen, die die vom Zugfahrzeug in den Raumkulturen zurückgelegte Strecke ermittelt, so daß den aufgenommenen Meßgrößen Positionen zugeordnet werden können.

Mit der erfindungsgemäßen Vorrichtung zum Besprühen von Raumkulturen können die Richtlinien der Biologischen Bundesanstalt für Land- und Forstwirtschaft Braunschweig für verlustarme Applikationsverfahren erfüllt werden, so daß wassergefährdende Sprühmittel, die nur mit verlustarmen Applikationsverfahren in der Nähe von Gewässern ausgebracht werden dürfen, auch dort anwendbar sind, und damit viele Anlagen erst mit der erfindungsgemäßen Vorrichtung behandelt werden dürfen. Das erfindungsgemäße verlustarme Applikationsverfahren weist neben Kostenvorteilen den Vorteil der leichten Handhabbarkeit auf, führt zu gleichem Belag auf den Zielobjekten, reduzierten Verlusten durch Lücken, reduzierter Abdrift, reduzierter Beaufschlagung des Bodens und höherer Schlagkraft.

Gemäß einer vorteilhaften Ausgestaltung der Erfindung enthalten die optischen Signale Infrarotstrahlung. Infrarotstrahlung ist wegen der Rotverschiebung des im grünen Farbstoff natürlicher Pflanzen enthaltenen Chlorophyls in besonderer Weise geeignet für die kostengünstige Auswertung der Verhältnisse in pflanzlichen Raumkulturen.

Alternativ kann die erfindungsgemäße Vorrichtung zum Besprühen von Raumkulturen Laserstrahlung in den optischen Signalen enthalten, die besonders große Reichweite, deutliche Adsorption und noch höhere Auflösung erlaubt.

Gemäß einer weiteren vorteilhaften Ausgestaltung der erfindungsgemäßen Vorrichtung zum Besprühen von Raumkulturen weist der Rechner eine Schnittstelle auf, über die im Rechner gespeicherte Daten, vorzugsweise mittels Chipkarte oder Telemetrie, auf Datenverarbeitungssysteme zur weiteren Verarbeitung übertragen werden können. Die ermittelten Daten, wie Belaubungsdichte oder Ausdehnung der Raumkulturen, können auf einem leistungsfähigen Datenverarbeitungssystem, wie z. B. einem PC mit spezifischer Software, für die Bestandsführung weiter genutzt werden. Beispielsweise kann die Kenntnis der Verteilung unterschiedlicher Meßgrößen über der Belaubungsoberfläche, z. B. der Belaubungsdichte oder der Raumkulturhöhe sowie -ausdehnung, für die ortsangepaßte Düngung genutzt werden, so daß Einsparungen an Düngemittel und/oder die lokale Optimierung der biologischen Leistungsfähigkeit der Raumkultur möglich ist. Insbesondere Wein- und Obstbauanlagen als Dauerkulturen bieten mit über lange Zeit festliegenden Strecken und festliegenden Anfängen und Enden der Strecken in den Weinbauanlagen, wo die Position von Sensoren oder Sprühvorrichtung eindeutig aus Streckenanfang und zurückgelegter Wegstrecke bestimmt werden kann, die Möglichkeit des Computer Aided Farming (CAF). Die für die Steuerung der Sprühvorrichtung fortlaufend detektierten und gespeicherten Zustandsparameter des Standorts und/oder der Kultur ergeben ein Verteilungsmuster aus Meßwerten, das wie eine Landkarte dargestellt werden kann. Mit Vergleichen von unterschiedlichen Messungen über die Vegetationszeit und über mehrere Wachstumszyklen sind genaue Kenntnisse der erfaßten Raumkulturen möglich, die Vorausetzung sind für eine Pflege der Raumkultur, die deren lokalen Bedingungen optimal angepaßt ist. Mit der Messung einzelner Pflanzen der Raumkulturen fallen bei Auswertung auf geeigneten Datenverarbeitungsanlagen mit geeigneter Software pflanzenphysiologische Informationen an, die Rückschlüsse auf Nährstoffversorgung, Blattflächenindex, Wuchshöhe, Ausbreitung im Raum, usw. erlauben, so daß sich Karteien für die Raumkulturen erstellen lassen, die eine teilflächenbezogene Bewirtschaftung, wie Düngung, Bewässerung, aber vor allem im Obst- und Weinbau bedeutungsvoll die Bestandsführung durch Kulturschnitt, Bindung oder Entgeizung, erlauben.

Die zuvor ermittelten Daten werden der in der Raumkultur fahrenden Vorrichtung zum Besprühen aus einem Speicher wieder verfügbar gemacht. Verknüpft mit der aktuellen Position der Vorrichtung zum Besprühen können die Daten für eine bereits vorher erfaßte Position aus dem Speicher abgefragt werden und zur Steuerung der Ventile eingesetzt werden.

Die erfindungsgemäße Vorrichtung zum Besprühen von Raumkulturen fördert mittels einer Pumpe das Sprühmittel über eine Verteilerarmatur mit einer Gleichdruckeinrichtung zu den Sprüheinrichtungen.

Gemäß der Erfindung sind die Ventile aus Membran-, Kugel-, Schieber- oder Sitzventilen gebildet.

Die erfindungsgemäßen Sprüheinrichtungen können geschoben und/oder geschwenkt und/oder im Strahlbild, Tropfengrößenspektrum oder Ausbringmenge variiert werden, so daß vielfältige Variationen möglich sind, wie das Sprühmittel auf die Belaubungsoberflächen der Raumkulturen ausgebracht werden kann.

Die Zentren der Abtastkegel der Sensoren an den Belaubungsoberflächen der parallelen Raumkulturen liegen gemäß einer weiteren Ausgestaltung der Erfindung um einen Abstand in Fahrtrichtung vor den Zentren der jeweils zugeordneten Strahlkegel der Sprüheinrichtungen, so daß hohe Übereinstimmung zwischen ausgewerteten Signalen der Sensoren und der mit Sprühmittel beaufschlagten Belaubungsoberfläche der Raumkultur besteht.

Die Zentren der Abtastkegel der Sensoren an den Belaubungsoberflächen der Raumkulturen der erfindungsgemäßen Vorrichtung liegen auf gleicher Höhe wie die Zentren der jeweils zugeordneten Strahlkegel der Sprüheinrichtungen.

Die Strahlrichtung der Sensoren zur Belaubungsoberfläche der Raumkulturen der erfindungsgemäßen Vorrichtung liegt in allen Raumrichtungen parallel zu der Strahlrichtung der jeweils zugeordneten Sprüheinrichtung, so daß kein Einfluß aus unterschiedlicher Spurlage in der Fahrgasse erfolgt.

Die Sensoren der erfindungsgemäßen Vorrichtung zum Besprühen von Raumkulturen sind um eine vertikale Achse schwenkbar angeordnet, wenn die Sprüheinrichtungen um eine vertikale Achse schwenkbar sind.

Zur Anpassung an den Reihenabstand der Raumkulturen sind die Rahmen der erfindungsgemäßen Vorrichtung seitlich verschiebbar.

Gemäß einer weiteren Ausgestaltung der Erfindung können die Sensoren vertikal verschieblich angeordnet sein.

Die Richtungen der abgegebenen Signale sind auf die Wurfrichtungen der Sprüheinrichtungen einstellbar, wobei der horizontale Abstand zwischen dem Blickpunkt des Sensors auf der Belaubungsoberfläche und dem Auftreffpunkt des Sprühmittels unabhängig von der Reihenweite der Raumkulturen konstant bleibt, womit auch Abweichungen der Fahrzeugspur in der Gasse zwischen den Reihen ohne Einfluß auf diesen Abstand bleiben.

Variiert der Abstand zwischen dem Blickpunkt des Sensors und dem Auftreffpunkt des Sprühmittels auf der Belaubungsoberfläche der Raumkultur durch unterschiedliche Fahrgeschwindigkeiten, Tropfengrößen des Sprühmittels, Volumenströme und unterschiedliche Strömungsgeschwindigkeiten einer Trägerluftströmung kann die Steuerung mit veränderbaren Parametern an die herrschenden Bedingungen mit unterschiedlichen Verzögerungen angepaßt werden.

Sensoren der erfindungsgemäßen Vorrichtung weisen in der horizontalen Ausdehnung der vorzugsweise linsenförmigen Abtastflächen an der Belaubungsoberfläche kleinere Ausdehnung auf als die Strahlbreite der kleinsten einsetzbaren Sprüheinrichtungen.

Sensoren der erfindungsgemäßen Vorrichtung entsprechen in der vertikalen Ausdehnung der vorzugsweise linsenförmigen Abtastflächen an der Belaubungsoberfläche der vertikalen Ausdehnung der Strahlbreite der einsetzbaren Sprüheinrichtungen. Diese erfindungsgemäße Ausgestaltung ist auch durch Strahlaufteilung des Sensorstrahls in mehrere übereinander angeordnete Einzelstrahlen möglich.

Sensoren der erfindungsgemäßen Vorrichtung erfassen mit nur einer punktförmigen Ausdehnung der Abtastflächen an der Belaubungsoberfläche diese stichprobenartig.

Die erfindungsgemäße Vorrichtung kann an alte und neue Geräte montiert werden unabhängig von der speziellen Gerätekonstruktion, wobei die Vorrichtung Hauptbaugruppen aufweist mit einem Grundgerät aus Sprühgerät, Behälter, Pumpe und Armatur und einer Gleichdruckeinrichtung mit Düsen und Magnetventilen, wobei eine Handbetätigung für Notbetrieb und ein Gebläse vorgesehen ist. Ein Koppelrahmen (3 Punkt) ist für einen international genormten mechanischen Anschluß vorgesehen. Sensoren sind vertikal übereinander mit einer Höhe entsprechend Düsenhöhe schwenkbar um Horizontalachse, wenn Düse um diese schwenkbar, und um Vertikalachse, wenn Düse um diese schwenkbar, angeordnet am Sensorträger, der seitlich verschiebbar ist für die Anpassung an die Reihenbreite (low price sensoren) der Kulturen. Die Sensoren weisen optische Taster auf, insbesondere IR Lichttaster, Laserlichttaster, deren Tastfeld vorzugsweise linsenförmig ist oder mehrere Tastfelder je Sensor (mehrstrahlig), wobei der Tastfelddurchmessser in Horizontalrichtung klein ist.

Gemäß der Erfindung wird ein Verfahren vorgeschlagen zum Besprühen von Raumkulturen, die parallel entlang einer befahrbaren Strecke angeordnet sind, bei dem ein Anfang der befahrbaren Strecke festgelegt wird, mit einem Zugfahrzeug mit Sprüheinrichtungen in die befahrbare Strecke eingefahren wird, wobei eine Einrichtung zur Wegmessung am Zugfahrzeug oder Anhängegerät am Anfang der befahrbaren Strecke vorzugsweise nullgesetzt, und der vom Zugfahrzeug zurückgelegte Weg auf der befahrbaren Strecke und die Geschwindigkeit des Zugfahrzeugs gemessen werden. Optische Signale werden quer zur Fahrtrichtung von in unterschiedlichen Höhen am Zugfahrzeug angeordneten Sensoren abgegeben, und die Reflexionen der Signale von den Belaubungsoberflächen werden durch den Sensor, der das Signal abgegeben hat, aufgenommen. Die von jedem Sensor abgegebenen und aufgenommenen optischen Signale werden einem Rechner kontinuierlich zugeführt und in Abhängigkeit von Abständen, die von der Einrichtung zur Wegmessung erfaßt werden, ausgewertet. Vom Rechner werden Schaltbefehle an Ventile ausgegeben, die den Sprüheinrichtungen jeweils zugeordnet sind, so daß von den Sensoren ermittelte Belaubungsoberflächen der Raumkulturen in Abhängigkeit von unterschiedlichen Vegetationszuständen besprüht werden können. Das erfindungsgemäße Verfahren ermöglicht die zielgerichtete Applikation von Sprühmittel, wie z. B. Pflanzenschutzmittel, in Raumkulturen, wobei das Vorhandensein von Belaubungsoberfläche für jede der Düsen durch einen zugeordneten Sensoren ermittelt wird. Durch Zuordnen von Positionen relativ zu einem festen Bezugspunkt am Beginn einer befahrbaren Strecke und den aufgenommenen Meßgrößen können Verteilungen innerhalb einer ausgewerteten Raumkultur aufgenommen werden, die für statistische Auswertungen geeignet sind, so daß die Voraussetzungen für Computer Aided Farming (CAF) geschaffen sind. Die Abtastung erlaubt Lückenerkennung, Zeilenanfang und -ende, Lücken durch fehlende Einzelpflanzen, Lücken innerhalb der Belaubung und bei Lücken innerhalb der Belaubung das Erkennen von Laubwandrückseiten bei lokaler Transparenz, sowie von Farben, Grünanteil, Oberflächentemperatur, woraus wiederum Verdunstung und Wasserversorgungszustand abgeleitet werden kann. Aus lokaler Verteilung der Meßwerte folgt die lokale Behandlung.

Das erfindungsgemäße Verfahren schafft die Voraussetzungen für die universelle Veränderung des Systemverhaltens der erfindungsgemäßen Vorrichtung, wie z. B. Anpassung der Vorrichtung an unterschiedliche Geräte oder an unterschiedliche Kulturen, Erziehungsformen und Vegetationszustände.

Gemäß einer vorteilhaften Ausgestaltung des erfindungsgemäßen Verfahrens zum Besprühen von Raumkulturen werden die optischen Signale kontinuierlich abgegeben, so daß die Raumkulturen im Meßbereich vollständig erfaßt werden.

Der Rechner der erfindungsgemäßen Vorrichtung zum Besprühen von Raumkulturen wertet Signale der Sensoren entlang der Strecke in gleichen Abständen, vorzugsweise von wenigen Zentimetern, aus. Die hochauflösbaren Daten aus den optischen Signalen erlauben eine genaue Auswertung im Rechner in kurzen Abständen, so daß auch kleine Lücken in den Belaubungsoberflächen der Raumkulturen berücksichtigt werden können. Der Schaltimpuls "Düse aus" kann von Position "Lückenanfang" bis "Lückenende" um die Strahlbreite der Düse verringert werden.

Das erfindungsgemäße Verfahren zum Besprühen von Raumkulturen mißt die vom Zugfahrzeug oder Anhängesprühgerät zurückgelegte Strecke inkremental, wobei die angefallenen Sensorsignale über das Weginkrement beurteilt werden. Hält die Sprühvorrichtung z. B. mitten in der Raumkultur an, kann nach erneuter Anfahrt die Raumkultur exakt nach den ermittelten Signalen behandelt werden.

Das Verfahren zum Besprühen von Raumkulturen gemäß der Erfindung wertet die von jedem Sensor abgegebenen und aufgenommenen optischen Signale im Rechner in getrennte Schaltbefehle an die Ventile in unterschiedlicher Höhe aus, so daß der hohen Auflösung der Signale entsprechend Belaubungsoberfläche gezielt mit Sprühmittel beaufschlagt wird.

Das erfindungsgemäße Verfahren zum Besprühen von Raumkulturen ist durch Voreinstellen von Parametern am Rechner, die für die Schaltbefehle an die Ventile eine automatische Anpassung an die Größe von Lücken in der Belaubungsoberfläche ergeben, z. B. auf Vegetationszyklen, Anbausituationen oder unterschiedliche Dichten der Raumkulturen einstellbar.

Gemäß einer weiteren Ausgestaltung des erfindungsgemäßen Verfahrens zum Besprühen von Raumkulturen werden die Spritzstrahlen der Sprüheinrichtung vollständig, geschwindigkeitsabhängig kompensiert, so daß erkannte Raumkulturen vollständig überstrichen werden.

Gemäß dem erfinderischen Verfahren zum Besprühen von Raumkulturen wird eine Sprüheinrichtung nur dann geschlossen, wenn eine vom Sensor festgestellte Lücke in der Belaubungsoberfläche der Raumkultur eine dem Rechner vorgebbare, frei wählbare Mindestgröße überschreitet. Eine nennenswerte Verringerung der eingesparten Sprühmittel wird durch die reduzierte Ansprechhäufigkeit der Ventile nicht verursacht.

Das Verfahren zum Besprühen von Raumkulturen gemäß der Erfindung berücksichtigt die Breite des Strahls der Sprüheinrichtung beim Zu- oder Abschalten der Sprüheinrichtung, so daß eine Pflanze stets von der vollständigen Breite eines Strahls der Sprüheinrichtung überstrichen wird.

Eine Anpassung des Systemverhaltens an die Arbeitsbedingungen beim Düsenstrahlauf- und abbau während des Zu- und Abschaltens der Sprüheinrichtungen ist mit Parametern der Steuerung möglich, wobei das Betriebsverhalten eingesetzter Magnetventile, Düsentyp, Flüssigkeitsdruck, Flüssigkeitsvolumenstrom, etc... berücksichtigt werden kann.

Das Verfahren zum Besprühen von Raumkulturen kann gemäß der Erfindung Randbereiche einer Belaubungsoberfläche mit einer geringeren Menge Sprühmittel belegen, so daß Vegetationsformen mit in den Randbereichen lichterer Belaubung entsprochen wird.

Gemäß der Erfindung werden die Sprüheinrichtungen der erfindungsgemäßen Vorrichtung bei Anhalten des Zugfahrzeugs automatisch abgeschaltet, unabhängig davon ob sich Belaubungsoberfläche vor einer Sprüheinrichtung befindet. Bei Weiterfahrt wird die zuvor von den Sensoren detektierte Belaubungsoberfläche entsprechend ihrer lokalen Anordnung ohne Einfluß durch das Anhalten behandelt.

Gemäß einer weiteren Ausgestaltung der Erfindung werden die Sensoren der erfindungsgemäßen Vorrichtung vor Beginn des Besprühens der Raumkulturen durch eine softwaregestützte Funktionskontrolle automatisch überprüft.

Gemäß einer weiteren Ausgestaltung der Erfindung werden bei Ausfall des Rechners die Sprüheinrichtungen konstant geöffnet, so daß eine dem konventionellen Verfahren entsprechende Behandlung weiter möglich ist.

Die Funktionskontrolle durch Software der erfindungsgemäßen Vorrichtung erfolgt durch Einstufen der Sensoren bei Beginn als defekt und Einstufen der Sensoren als funktionsfähig, wenn der Rechner erkannt hat, daß die Sensoren ein Signal abgeben und aufnehmen.

Das erfindungsgemäße Verfahren zum Besprühen von Raumkulturen erkennt eine Fehlfunktion durch Bewerten der Signale eines Sensors, z. B. wenn ein oberer Sensor mehrfach ein Signal aufnimmt, obwohl die unteren Sensoren kein Signal aufnehmen.

Ein Zielobjekt wird gemäß der Erfindung mit der gesamten Strahlbreite und vollständigem Überstreichen gespritzt, wobei die Dosierung nach Laubwandtiefe und Laubwandschattenfläche (Höhe und Breite) erfolgen kann. Gemäß Algorithmus wird eine Düse abgeschaltet, wenn eine Lücke breiter als der Strahl ist. Die Strahlbreite kann berücksichtigt werden bei variabler Lückengröße für unterschiedliche Behandlungssituationen. Die Düsen können nach Abstand zum Zielobjekt voreilend geöffnet werden und die Strahlverformung infolge Fahrzeuggeschwindigkeit kann berücksichtigt werden. Die Schaltzeiten der Aktoren können berücksichtigt werden und die Düsen können abhängig vom Fahrweg geschaltet werden.

Die Erfindung wird im folgenden anhand eines Ausführungsbeispiels dargestellt. Es zeigen:
- Fig. 1: eine Draufsicht auf eine Vorrichtung zum Besprühen von Raumkulturen gemäß der Erfindung, und
- Fig. 2: eine Rückansicht einer Vorrichtung zum Besprühen von Raumkulturen gemäß der Erfindung.

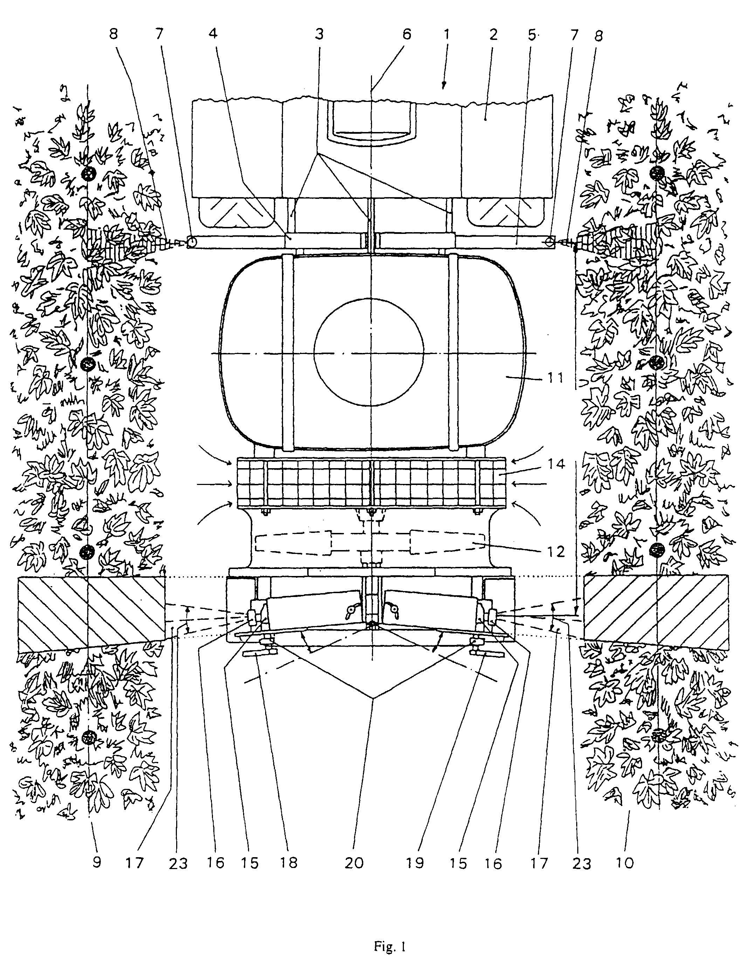

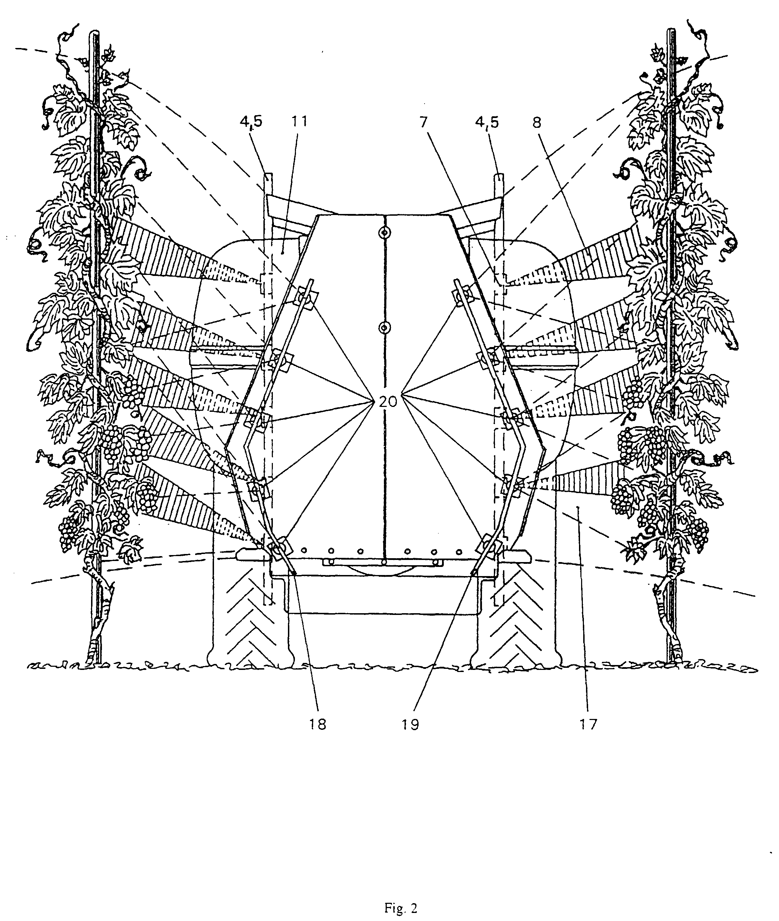

Fig. 1, 2: Eine Vorrichtung 1 zum Besprühen von Raumkulturen weist ein Zugfahrzeug 2 mit einer Dreipunktaufnahme 3 auf. An der Dreipunktaufnahme 3 sind Rahmen 4, 5 rechtwinklig zu einer Längsachse 6 der Vorrichtung 1 zum Besprühen von Raumkulturen verschieblich befestigt.

An den Rahmen 4, 5 sind um vertikale Achsen schwenkbare, vertikal übereinander Sensoren 7, die Infrarot- oder Laserlicht punktförmig oder flächig abgeben, befestigt.

Vorzugsweise können zur Abtastung der Größe und Ausdehnung der Silhouette einer Raumkultur mehrere handelsübliche Infrarotsensoren verwendet werden. Von den Sensoren gehen kontinuierlich optische Signale in Kegeln 8 mit variierbaren Öffnungswinkeln radial nach außen ab, die auf beidseits parallel zur Längsachse 6 angeordnete Belaubungsoberflächen 9, 10 einer Raumkultur gerichtet sind. Von den Belaubungsoberflächen 9, 10 reflektierte Signale werden von den Sensoren 7 aufgenommen, die das optische Signal ursprünglich abgegeben haben.

Ein Vorratsbehälter 11 für Sprühmittel ist mit einer von einer Zapfwelle des Zugfahrzeugs angetriebenen Flüssigkeitspumpe für Sprühmittel ausgestattet. Regulierbare Sprüheinrichtungen 16 sind auf gegenüberliegenden Seiten an Düsenbogen 18, 19 vertikal übereinander angeordnet. Die Düsenbogen 18, 19 sind an Versorgungsleitungen für das Sprühmittel angeschlossen. Ein durch die Zapfwelle angetriebenes Gebläse 12 saugt Luft über einen Lufteinlaß 14 an und führt diese Luftauslaßöffnungen 15 zu. Das Sprühmittel wird unter Druck durch regulierbare Sprüheinrichtungen 16, wie z. B. Düsen in dem Gebläseluftstrom, nach außen auf die Belaubungsoberflächen 9, 10 in Kegeln 17 mit variierbaren Öffnungswinkeln 23 gespritzt. Ventile 20, vorzugsweise elektrisch gesteuerte Magnetventile, sind den Sprüheinrichtungen 16 jeweils zugeordnet.

Ein Rechner (nicht dargestellt) wertet die Signale der Sensoren 7 aus und öffnet und schließt die Zufuhr von Sprühmittel zu den zugehörigen Sprüheinrichtungen 16 in Abhängigkeit von diesen Signalen. Der Rechner kann mit einem Speicher ausgestattet sein und weist eine Schnittstelle auf, von der Daten vorzugsweise per Telemetrie oder Chipkarte einer Datenverarbeitungsanlage mit geeigneter Software zugeführt werden. Der Speicher ist vorzugsweise so groß, daß alle in einer Raumkultur während eines Bearbeitungsvorgangs anfallenden Daten gespeichert werden können.

### Verfahren zum Besprühen von Raumkulturen

Für die Steuerung der Ventile 20 relevante Parameter können dem Rechner über eine Steuervorrichtung (nicht gezeigt) von außen vorgegeben werden. Parameter, die von außen über die Steuervorrichtung oder durch den Rechner automatisch erfolgen können, sind: Parameter für die Lückengröße in Abhängigkeit von der Belaubungsdichte der Raumkultur, Parameter für Verzögerung zwischen Sensorposition und Sprüheinrichtung als Voraussetzung für einen universellen Einsatz der Vorrichtung 1 zum Besprühen von Raumkulturen als Nachrüstvariante für unterschiedliche Spritz- und Sprühgeräte von beispielsweise Wettbewerbern, Parameter für die Mindest-Lückengröße, Parameter für unterschiedliche Kulturen und Parameter für unterschiedliche Anbausituationen, Vegetationszustände und Sorten. Der durch unterschiedliche Fahrgeschwindigkeiten, Tropfengrößen, Volumenströme und unterschiedlich hohe Strömungsgeschwindigkeiten der Luftströme aus dem Gebläse 12 variable Abstand zwischen dem Blickpunkt der Sensoren 7 und dem Auftreffpunkt des Sprühmittels auf die Belaubungsoberflächen 9, 10 wird mit einem gesonderten Verzögerungsparameter vom Rechner berücksichtigt. An der Raumkultur wird zunächst ein Anfang der befahrbaren Strecke festgelegt. Beim Einfahren mit dem Zugfahrzeug der Vorrichtung 1 zum Besprühen in diese befahrbare Strecke, wird eine Einrichtung zur Wegmessung (bei neueren Traktoren schlepperseitig verfügbares Weg-/Geschwindigkeitssignal) am Zugfahrzeug 2, oder bei Anhängesprühgeräten das Wegsignal vom nicht angetriebenen Anhängerrad auf einen Bezugswert, vorzugsweise auf Null, gesetzt. Die Einrichtung zur Wegmessung mißt den vom Zugfahrzeug und angebauten oder angehängtem Sprühgerät zurückgelegten Weg auf der befahrenen Strecke. Die Geschwindigkeit des Fahrzeugs wird auch gemessen.

Während der Fahrt durch die Raumkultur werden optische Signale quer zur Fahrtrichtung von in unterschiedlichen Höhen am Zugfahrzeug 2 angeordneten Sensoren 7 abgegeben. Der Sensor 7, der das Signal abgegeben hat, nimmt Reflexionen von den Belaubungsoberflächen 9, 10 der vom Sensor 7 abgegebenen optischen Signale auf, wenn tatsächlich Belaubungsoberfläche einer Pflanze vorhanden ist und nimmt keine Reflexionen auf, wenn Lücken in der Belaubungsoberfläche 9, 10 sind oder die Raumkultur verlassen wurde.

Die von jedem Sensor 7 abgegebenen und aufgenommenen optischen Signale werden einem Rechner zugeführt, der die abgegebenen und aufgenommenen optischen Signale speichert und in von der Einrichtung zur Wegmessung erfaßten Abständen auswertet. In Abhängigkeit von der Auswertung werden Schaltbefehle vom Rechner an die Ventile 20 ausgegeben, die den Sprüheinrichtungen 16 jeweils zugeordnet sind. Sprühmittel wird zu den Ventilen 20 gefördert, und in Abhängigkeit von der Schaltstellung der Ventile 20 werden von den Sensoren festgestellte Belaubungsoberflächen 9, 10 der Raumkulturen in Abhängigkeit von unterschiedlichen Vegetationszuständen besprüht. Die Ventile 20 werden so geschaltet, daß nur dort Sprühmittel ausgebracht wird, wo Belaubungsoberfläche von den jeweiligen Sprüheinrichtungen 16 überstrichen wird. Luft wird von dem Gebläse 12 über den Lufteinlaß 14 angesaugt und unter Druck den Luftauslaß- öffnungen 15 zugeführt. Das Sprühmittel wird unter Druck durch die regulierbaren Sprüheinrichtungen 16 nach außen auf die Belaubungsoberflächen 9, 10 in Kegeln 17 mit variierbaren Öffnungswinkeln gespritzt.

Die Steuerung der Menge des ausgebrachten Sprühmittels wird unter Berücksichtigung der lokalen Parameter der Raumkultur mit einer Mengensteuerung in Abhängigkeit der aktuellen Fahrgeschwindigkeit der Vorrichtung zum Besprühen variiert.

Die Position der Vorrichtung 1 zum Besprühen von Raumkulturen kann eindeutig aus dem Beginn der Strecke und der zurückgelegten Strecke bestimmt werden. Die Zustandsparameter der Raumkultur werden im Rechner fortlaufend erfaßt und mit der ermittelten Position gespeichert.

Die Sensoren 7 können vertikal verschoben, um die Vertikalachse und um die der Fahrtrichtung parallele Horizontalachse geschwenkt werden, um die Richtung der Sensoren 7 der Richtung der Sprüheinrichtungen 16 anzupassen. Die Sensoren 7 können in ihrem Rahmen 4, 5 seitlich zur Anpassung an den Reihenabstand verschoben werden. Die Sprüheinrichtungen 16 können geschaltet, geschoben und geschwenkt werden, und das Strahlbild des Sprühmittels kann in Form, Größe, Tropfengrößenspektrum und Ausbringmenge variiert werden. Die Schaltzeiten für die Ventile 20 werden in Abhängigkeit von der Geschwindigkeit der Vorrichtung 1 zum Besprühen so kompensiert, daß ein Sprühmittelstrahl jede erfaßte Belaubungsoberfläche 9, 10 vollständig überstreicht. Ein Ventil 20 wird nur geschlossen, wenn eine Lücke in der Belaubungsoberfläche 9, 10 festgestellt wurde, die eine vorbestimmbare Mindestgröße überschreitet, vorzugsweise entsprechend der Strahlbreite der Sprüheinrichtung, so daß Sprühmittel gleichmäßig verteilt wird und die Schalthäufigkeit der Ventile 20 reduziert wird. Bei kritischen Befallsituationen der Raumkulturen, kann die Lückengröße so groß gewählt werden, daß nur am Zeilenende eine Abschaltung erfolgt.

Bei unkritischen Befallsituationen kann die Lückengröße so klein gewählt werden, daß auch Lücken kleiner als die Strahlbreite der Sprüheinrichtung 16 zum Abschalten der Düsen führen, so daß die Behandlung der Belaubungsoberflächen 9, 10 an den Rändern zur Lücke mit verminderter Dosis erfolgt.

Steht die Vorrichtung 1 zum Besprühen von Raumkulturen werden die Ventile 20 unabhängig von erfaßter Belaubungsoberfläche 9, 10 automatisch geschlossen. Bei Weiterfahrt werden die Ventile 20 ohne Einfluß aus einem Stop geschaltet.

Vor Beginn des Besprühens wird die Funktion der Sensoren 7 durch eine softwaregestützte Funktionskontrolle auf Fehler aus einer verschmutzten Optik, gebrochenen Kabeln, fehlerhaften Steckverbindungen oder fehlerhaften Ventilen 20 überprüft, wobei von der Software davon ausgegangen wird, daß alle Sensoren 7 defekt sind. Erst wenn ein Sensor 7 sowohl eine Lücke als auch eine Belaubungsoberfläche 9, 10 erkannt hat, wird er als funktionsfähig eingestuft. Wird ein Fehler in den Sensoren 7, dem Rechner, oder den Ventilen 20 festgestellt, werden alle Ventile 20 geöffnet, so daß eine dem herkömmlichen Verfahren entsprechende Besprühung erfolgt. Zusätzlich erfolgen Plausibilitätsprüfungen. Detektiert etwa ein oberer Sensor 7 mehrfach Belaubungsoberfläche 9 oder 10, obwohl untere Sensoren 7 keine Belaubungsoberfläche 9 oder 10 erkennen, wird davon ausgegangen, daß der Sensor 7 fehlerhaft arbeitet z. B. durch eine verschmutzte Optik oder Kabelbruch.

Herkömmliche Spritz- und Sprühgeräte können auch nachträglich mit der erfindungsgemäßen Vorrichtung 1 verbunden werden, wobei die Montage der Sensoren 7 und des Rechners in einer normgerechten Halterung für die Dreipunktaufnahme 3 zur Kopplung an das Zugfahrzeug 2 vorgesehen ist. Hieran können Sprühgeräte angebaut (Anbaugeräte) oder angehängt (Anhänger) werden.

Hierzu erfolgt der nachträgliche Einbau der Ventile 20 und eines Wegmessers an einem nicht getriebenen Rad des Anhängers bei Anhängergeräten oder des Zugfahrzeugs 2 bei Anbaugeräten.

## Patentansprüche

1. Vorrichtung (1) zum Besprühen von Raumkulturen, insbesondere von Wein- und Obstkulturen, die parallel entlang befahrbarer Strecken angeordnet sind, mit einem Zugfahrzeug (2), das mit einer Geschwindigkeitsmeßvorrichtung ausgestattet ist, einem Vorratsbehälter (11) für Sprühmittel, einer Flüssigkeitspumpe für das Sprühmittel einem Gebläse (12),
*auf einem Anhängegerät angeordneten* regulierbaren Sprüheinrichtungen (16), die auf gegenüberliegenden Seiten an Düsenbogen (18, 19) vertikal übereinander angeordnet sind, Ventilen (20), die den Sprüheinrichtungen (16) jeweils zugeordnet sind und diese steuern,
Sensoren (7), die in Fahrtrichtung vor den *Sprüheinrichtungen (16)* und vertikal übereinander angeordnet sind und Signale abgeben und aufnehmen können, und
einem Rechner, der mit den Sensoren (7) und den Ventilen (20) verbunden ist, und die abgegebenen und aufgenommenen Signale der Sensoren (7) auswertet, und die Ventile (20) steuert,
**dadurch gekennzeichnet, daß**
die Sensoren (7) am Zugfahrzeug (2) in einer Dreipunktaufnahme (3) annähernd parallel zu den Belaubungsoberflächen (9, 10) der Raumkulturen angeordnet sind,
*ein qualitativ gleicher Abstand zwischen Schlepperhinterachse und Ebene der Sensoren sowie Anhängerachse und Ebene der Sprüheinrichtungen besteht,*
die Sensoren (7) optische Signale abgeben und aufnehmen und eine Meßeinrichtung vorgesehen ist, die die vom Zugfahrzeug (2) oder vom Anhänger zurückgelegte Strecke dem Rechner zuführt.

2. Vorrichtung (1) zum Besprühen von Raumkulturen gemäß Anspruch 1, dadurch gekennzeichnet, daß die optischen Signale Infrarotstrahlung enthalten.

3. Vorrichtung (1) zum Besprühen von Raumkulturen gemäß Anspruch 1, dadurch gekennzeichnet, daß die optischen Signale Laserstrahlung enthalten.

4. Vorrichtung (1) zum Besprühen von Raumkulturen gemäß Anspruch 1, dadurch gekennzeichnet, daß der Rechner mindestens einen Speicher und eine Schnittstelle aufweist, über die im Rechner enthaltene Daten, vorzugsweise mittels Chipkarte oder Telemetrie, auf Datenverarbeitungssysteme zur weiteren Verarbeitung übertragen werden können.

5. Vorrichtung (1) zum Besprühen von Raumkulturen gemäß Anspruch 1, dadurch gekennzeichnet, daß das Fördermittel (12) eine Pumpe enthält und das Sprühmittel über eine Verteilerarmatur mit einer Gleichdruckeinrichtung zu den Sprüheinrichtungen gelangt.

6. Vorrichtung (1) zum Besprühen von Raumkulturen gemäß Anspruch 1, dadurch gekennzeichnet, daß die Ventile (20) aus Membran-, Kugel-, Schieber- oder Sitzventilen gebildet sind.

7. Vorrichtung (1) zum Besprühen von Raumkulturen gemäß Anspruch 1, dadurch gekennzeichnet, daß die Sprüheinrichtungen (16) geschoben und/oder geschwenkt und/oder im Strahlbild, Tropfengrößenspektrum oder Ausbringmenge variiert werden können.

8. Vorrichtung (1) zum Besprühen von Raumkulturen gemäß Anspruch 1, dadurch gekennzeichnet, daß Zentren der Abtastkegel der Sensoren (7) an Belaubungsoberflächen (9, 10) der Raumkulturen um einen Abstand in Fahrtrichtung vor den Zentren der jeweils zugeordneten Strahlkegel der Sprüheinrichtungen (16) liegen.

9. Vorrichtung (1) zum Besprühen von Raumkulturen gemäß Anspruch 1, dadurch gekennzeichnet, daß Zentren der Abtastkegel der Sensoren (7) an Belaubungsoberflächen (9, 10) der Raumkulturen auf gleicher Höhe wie die Zentren der jeweils zugeordneten Strahlkegel der Sprüheinrichtungen (16) liegen.

10. Vorrichtung (1) zum Besprühen von Raumkulturen gemäß Anspruch 1, dadurch gekennzeichnet, daß die Strahlrichtung der Sensoren (7) zur Belaubungsoberfläche (9, 10) der Raumkulturen in allen Raumrichtungen parallel zu der Strahlrichtung der jeweils zugeordneten Sprüheinrichtung (16) liegen.

11. Vorrichtung (1) zum Besprühen von Raumkulturen gemäß Anspruch 1, dadurch gekennzeichnet, daß die Sensoren (7) um eine vertikale Achse schwenkbar angeordnet sind, wenn die Sprüheinrichtungen (16) um eine vertikale Achse schwenkbar sind.

12. Vorrichtung (1) zum Besprühen von Raumkulturen gemäß Anspruch 1, dadurch gekennzeichnet, daß die Rahmen (4, 5), an denen die Sensoren (7) gehalten sind, seitlich verschiebbar sind.

13. Vorrichtung (1) zum Besprühen von Raumkulturen gemäß Anspruch 1, dadurch gekennzeichnet, daß die Sensoren (7) vertikal verschiebbar angeordnet sind.

14. Vorrichtung (1) zum Besprühen von Raumkulturen gemäß Anspruch 1, dadurch gekennzeichnet, daß die Sensoren (7) in der horizontalen Ausdehnung der Abtastflächen an der Belaubungsoberfläche (9, 10) kleinere Abtastbereiche aufweisen als die Strahlbreite der kleinsten einsetzbaren Sprüheinrichtungen (16).

15. Vorrichtung (1) zum Besprühen von Raumkulturen gemäß Anspruch 1, dadurch gekennzeichnet, daß die Sensoren (7) in der vertikalen Ausdehnung der Abtastflächen an der Belaubungsoberfläche (9, 10) der vertikalen Ausdehnung der Strahlbreite der einsetzbaren Sprüheinrichtungen (16) entsprechen.

16. Vorrichtung (1) zum Besprühen von Raumkulturen gemäß Anspruch 1, dadurch gekennzeichnet, daß die Sensoren (7) mit nur einer punktförmigen Ausdehnung der Abtastflächen an der Belaubungsoberfläche (9, 10) diese stichprobenartig erfassen.

17. Verfahren zum Besprühen von Raumkulturen, die parallel entlang einer befahrbaren Strecke angeordnet sind, *mit einer Vorrichtung gemäß Anspruch 1* mit den folgenden Schritten:
Festlegen eines Anfangs der befahrbaren Strecke,
Einfahren mit einem Zugfahrzeug (2) in die befahrbare Strecke,
Setzen eines Bezugswerts in einer Einrichtung zur Wegmessung am Zugfahrzeug (2) oder Anhänger am Anfang der befahrbaren Strecke,
Messen des vom Zugfahrzeug (2) zurückgelegten Wegs auf der befahrbaren Strecke,
Messen der Geschwindigkeit des Zugfahrzeugs (2),
Abgeben optischer Signale quer zur Fahrtrichtung von in unterschiedlichen Höhen am Zugfahrzeug (2) angeordneten Sensoren (7),
Aufnehmen durch den Sensor (7), der das Signal abgegeben hat, der Reflexionen von den Belaubungsoberflächen (9, 10) der vom Sensor (7) abgegebenen optischen Signale,
Zuführen einem Rechner der von jedem Sensor (7) abgegebenen und aufgenommenen optischen Signale,
Speichern der von jedem Sensor (7) abgegebenen und aufgenommenen optischen Signale,
Auswerten der von jedem Sensor (7) abgegebenen und aufgenommenen optischen Signale in dem Rechner in von der Einrichtung zur Wegmessung erfaßten Abständen,
Ausgeben von Schaltbefehlen von dem Rechner an Ventile (20), die den Sprüheinrichtungen (16) jeweils zugeordnet sind,
Fördern von Sprühmittel zu den Ventilen (16), und
Besprühen der von den Sensoren (7) festgestellten Belaubungsoberflächen (9, 10) der Raumkulturen in Abhängigkeit von unterschiedlichen Vegetationszuständen.

18. Verfahren zum Besprühen von Raumkulturen gemäß Anspruch 17, gekennzeichnet durch kontinuierliches Abgeben der optischen Signale.

19. Verfahren zum Besprühen von Raumkulturen gemäß Anspruch 17, gekennzeichnet durch Auswerten der von jedem Sensor (7) abgegebenen und aufgenommenen optischen Signale in dem Rechner in von der Einrichtung zur Wegmessung erfaßten in gleichen Abständen von vorzugsweise wenigen Zentimetern.

20. Verfahren zum Besprühen von Raumkulturen gemäß Anspruch 17, gekennzeichnet durch inkrementales Messen der vom Zugfahrzeug (2) zurückgelegten Strecke.

21. Verfahren zum Besprühen von Raumkulturen gemäß Anspruch 17, gekennzeichnet durch Auswerten der von jedem Sensor (7) abgegebenen und aufgenommenen optischen Signale in dem Rechner in getrennten Schaltbefehlen an getrennt ansteuerbare Ventile (20) in unterschiedlicher Höhe.

22. Verfahren zum Besprühen von Raumkulturen gemäß Anspruch 17, gekennzeichnet durch Voreinstellen von Parametern am Rechner, die für die Schaltbefehle an die Ventile (20) eine automatische Anpassung an die Größe von Lücken in der Belaubungsoberfläche (9, 10) ergibt.

23. Verfahren zum Besprühen von Raumkulturen gemäß Anspruch 17, gekennzeichnet durch vollständiges, geschwindigkeitsabhängiges Kompensieren der Sprühmittelstrahlen.

24. Verfahren zum Besprühen von Raumkulturen gemäß Anspruch 17, gekennzeichnet durch Schließen einer Sprüheinrichtung (16) nur dann, wenn eine vom Sensor (7) festgestellte Lücke in der Belaubungsoberfläche (9, 10) der Raumkultur eine dem Rechner vorgebbare, frei wählbare Mindestgröße überschreitet.

25. Verfahren zum Besprühen von Raumkulturen gemäß Anspruch 17, gekennzeichnet durch Berücksichtigung der Einschaltzeiten der Ventile.

26. Verfahren zum Besprühen von Raumkulturen gemäß Anspruch 17, gekennzeichnet durch Berücksichtigung der Ausschaltzeiten der Ventile.

27. Verfahren zum Besprühen von Raumkulturen gemäß Anspruch 17, gekennzeichnet durch Belegen eines Randbereichs einer Belaubungsoberfläche (9, 10) mit einer geringeren Menge Sprühmittel.

28. Verfahren zum Besprühen von Raumkulturen gemäß Anspruch 17, gekennzeichnet durch automatisches Abschalten der Sprüheinrichtungen (16) bei Stillstand des Zugfahrzeugs (2).

29. Verfahren zum Besprühen von Raumkulturen gemäß Anspruch 17, gekennzeichnet durch automatisches Überprüfen der Sensoren (7) zu Beginn durch eine softwaregestützte Funktionskontrolle.

30. Verfahren zum Besprühen von Raumkulturen gemäß Anspruch 17, gekennzeichnet durch konstantes Öffnen der Sprüheinrichtungen (16) bei Ausfall des Rechners.

31. Verfahren zum Besprühen von Raumkulturen gemäß Anspruch 17, gekennzeichnet durch Einstufen der Sensoren (7) bei Beginn als defekt und Einstufen eines Sensors (7) als funktionsfähig, wenn ein Sensor (7) ein Signal abgibt und aufnimmt.

32. Verfahren zum Besprühen von Raumkulturen gemäß Anspruch 17, gekennzeichnet durch Bewerten der Signale eines Sensors (7) als Fehlfunktion, wenn ein oberer Sensor (7) mehrfach ein Signal aufnimmt, obwohl die unteren Sensoren (7) kein Signal aufnehmen.

## Claims

1. Device (1) for spraying large cultivated areas, in particular vine and fruit plantations, which are arranged in parallel along passable rows, having a tractor unit (2), which is equipped with a speed measuring device, a storage container (11) for spray medium, a liquid pump for the spray medium, a blower (12), *trailer-mounted* adjustable spray units (16), arranged vertically one on top of the other on opposite sides on curved nozzles (18, 19), valves (20), which are allocated to and control the spray units (16), sensors (7), which are positioned vertically, one on top of the other, in the direction of travel in front of the *spray units (16)* and which can emit and receive signals, and a computer, which is connected to the sensors (7) and the valves (20) and which analyses the signals emitted and received by the sensors (7) and which controls the valves (20), characterised in that the sensors (7) are positioned on the tractor unit (2) in a three-point mounting (3) approximately parallel to the surfaces of the foliage (9, 10), of the large cultivated areas,
*there is a distance of the same quality between the rear axle of the tractor unit and the sensor plane and also between the trailer axle and the spray unit plane,* the sensors (7) emit and receive optical signals and a measuring instrument is provided, which transmits, to the computer, the distance travelled by the tractor unit (2) or trailer.

2. Device (1) for spraying large cultivated areas according to claim 1, characterised in that the optical signals contain infrared radiation.

3. Device (1) for spraying large cultivated areas according to claim 1, characterised in that the optical signals contain laser radiation.

4. Device (1) for spraying large cultivated areas according to claim 1, characterised in that the computer comprises at least one memory and one interface, by which the data contained in the computer can be transmitted to data processing systems for further processing, preferably by means of chip card or telemetry.

5. Device (1) for spraying large cultivated areas according to claim 1, characterised in that the conveyor (12) includes a pump and the spray medium is conveyed to the spray units via a distributor fitting with a constant pressure unit.

6. Device (1) for spraying large cultivated areas according to claim 1, characterised in that the valves (20) are made up of diaphragm, ball, slide or seating valves.

7. Device (1) for spraying large cultivated areas according to claim 1, characterised in that the spray units (16) can be slid and/or swivelled and/or the spray pattern, range of droplet sizes or output volume can be varied.

8. Device (1) for spraying large cultivated areas according to claim 1, characterised in that centres of the cones of the sensors (7) are located at foliage surfaces (9, 10) of the large cultivated areas, at a distance in the direction of travel, in front of the centres of the respective spray cones of the spray units (16).

9. Device (1) for spraying large cultivated areas according to claim 1, characterised in that centres of the cones of the sensors (7) are located at foliage surfaces (9, 10) of the large cultivated areas, at the same height as the centres of the respective spray cones of the spray units (16).

10. Device (1) for spraying large cultivated areas according to claim 1, characterised in that the direction of spraying of the sensors (7), in relation to the surface of the foliage (9, 10) of the large cultivated areas, is parallel to that of the respective spray unit (16) in all directions in space.

11. Device (1) for spraying large cultivated areas according to claim 1, characterised in that the sensors (7) can be swivelled about a vertical axis when the spray units (16) can be swivelled about a vertical axis.

12. Device (1) for spraying large cultivated areas according to claim 1, characterised in that the frames (4, 5) on which the sensors (7) are mounted, can be adjusted laterally.

13. Device (1) for spraying large cultivated areas according to claim 1, characterised in that the sensors (7) are arranged so that they can be adjusted vertically.

14. Device (1) for spraying large cultivated areas according to claim 1, characterised in that the sensors (7) have smaller scanning areas in the horizontal extension of the scanning surfaces of the foliage surface (9, 10) than the spraying width of the smallest spray unit (16) used.

15. Device (1) for spraying large cultivated areas according to claim 1, characterised in that the vertical extension of the scanning areas of the sensors (7) in respect of the foliage area (9, 10) coincides with the vertical extension of the spraying width of the spraying unit (16) used.

16. Device (1) for spraying large cultivated areas according to claim 1, characterised in that the sensors (7), with only one point extension of the scanning surfaces on the foliage surface (9, 10), measures it on a random sample basis.

17. Process for spraying large cultivated areas, which are arranged in parallel along a passable row *having a device according to claim 1,* and incorporating the following steps:
establishing the beginning of the passable row,
entering the passable row with a tractor unit (2), setting a reference value in a distance measuring device on the tractor unit (2) or trailer at the beginning of the passable row,
measuring the distance covered by the tractor unit (2) along the passable row
measuring the speed of the tractor unit (2),
emitting optical signals at an angle to the direction of travel from sensors (7) located at different heights on the tractor unit (2),
the picking up by the sensor (7), which has emitted the signal, of the reflections from the surfaces of the foliage (9, 10), of the optical signals emitted by the sensor (7),
transmitting to a computer the optical signals emitted and picked up by each sensor (7),
storing the optical signals emitted and picked up by each sensor (7),
analysing by computer the optical signals emitted and picked up by each sensor (7) at intervals measured by the distance measuring device,
issuing switching commands from the computer to valves (20), which are assigned to the respective spray units (16),
conveying spray medium to the valves (16) and spraying the surfaces of the foliage (9, 10) of the large cultivated areas, as detected by the sensors (7), according to the different states of growth.

18. Process for spraying large cultivated areas according to claim 17, characterised by the continuous emission of optical signals.

19. Process for spraying large cultivated areas according to claim 17, characterised by analysing the optical signals emitted and picked up by each sensor (7) in the computer, at the same intervals measured by the distance-measuring device, preferably of a few centimetres.

20. Process for spraying large cultivated areas according to claim 17, characterised by the incremental measuring of the distance covered by the tractor unit (2).

21. Process for spraying large cultivated areas according to claim 17, characterised by analysing by computer, the optical signals emitted and picked up by each sensor (7) in separate switching commands to separately controlled valves (20) at different levels.

22. Process for spraying large cultivated areas according to claim 17, characterised by pre-setting parameters at the computer, so that there is automatic adjustment to the size of gaps in the foliage surface (9, 10) for the switching commands to the valves (20).

23. Process for spraying large cultivated areas according to claim 17, characterised by complete, speed-related compensation for spraying spray medium.

24. Process for spraying large cultivated areas according to claim 17, characterised by closing one spray unit (16) only when a gap in the surface of the foliage (9, 10) of the large cultivated area, detected by the sensor (7), exceeds a freely selectable minimum value that can be pre-selected by the computer.

25. Process for spraying large cultivated areas according to claim 17, characterised by taking account of the on-times of the valves

26. Process for spraying large cultivated areas according to claim 17, characterised by taking account of the off-times of the valves.

27. Process for spraying large cultivated areas according to claim 17, characterised by covering a marginal area of a foliage surface (9, 10), with a small amount of spray medium.

28. Process for spraying large cultivated areas according to claim 17, characterised by the spray units (16) cutting out automatically when the tractor unit (2) comes to a standstill.

29. Process for spraying large cultivated areas according to claim 17, characterised by automatic checking of the sensors (7) at the beginning by means of a software-supported function check.

30. Process for spraying large cultivated areas according to claim 17, characterised by the spray units (16) being constantly open if the computer fails.

31. Process for spraying large cultivated areas according to claim 17, characterised by classifying the sensors (7) as faulty at the start and classifying a sensor (7) as operational if a sensor (7) emits and picks up a signal.

32. Process for spraying large cultivated areas according to claim 17, characterised by assessing the signals of one sensor (7) as a malfunction, if a top sensor (7) picks up a signal several times, although the lower sensors (7) do not pick up any signal.

## Revendications

1. Dispositif (1) de pulvérisation de cultures étendues, en particulier de cultures viticoles et fruitières placées parallèlement à des sections de déplacement,
comprenant
un véhicule de traction (2) équipé d'un tachymètre,
d'un réservoir de stockage (11) pour des produits à pulvériser,
d'une pompe à liquides pour le produit à pulvériser,
d'un ventilateur (12),
sur une remorque, des dispositifs de pulvérisation réglables (16) qui sont montés verticalement de part et d'autre sur des arceaux de buses (18, 19),
des soupapes (20) qui sont affectées à chacun des dispositifs de pulvérisation (16) et commandent ceux-ci,
des détecteurs (7) qui sont montés, dans le sens de la marche, en amont des dispositifs de pulvérisation (16) verticalement l'un au-dessus de l'autre, qui peuvent émettre et recevoir des signaux, et
un ordinateur qui est relié aux détecteurs (7) et aux soupapes (20), qui évalue les signaux émis et reçus par les détecteurs (7) et qui commande les soupapes (20),
**caractérisé en ce que**
les détecteurs (7) sont montés sur le véhicule de traction (2) à un attelage trois points (3) de manière approximativement parallèle aux surfaces de feuillaison (9, 10) des cultures étendues,
qu'il existe une distance qualitativement égale entre l'essieu arrière du tracteur et le niveau des palpeurs ainsi qu'entre l'essieu de la remorque et le niveau des dispositifs de pulvérisation,
que les détecteurs (7) émettent et reçoivent des signaux optiques et qu'un appareil de mesure est prévu qui transmet à l'ordinateur la distance parcourue par le véhicule de traction (2) ou par la remorque.

2. Dispositif (1) pour la pulvérisation de cultures étendues selon la revendication 1, caractérisé en ce que les signaux optiques comprennent un rayonnement infrarouge.

3. Dispositif (1) pour la pulvérisation de cultures étendues selon la revendication 1, caractérisé en ce que les signaux optiques comprennent un rayonnement laser.

4. Dispositif (1) pour la pulvérisation de cultures étendues selon la revendication 1, caractérisé en ce que l'ordinateur comprend au moins une mémoire et une interface permettant la transmission des données présentes dans l'ordinateur, de préférence au moyen de carte à puce ou par télémétrie, à des systèmes de traitement de données afin de poursuivre leur traitement.

5. Dispositif (1) pour la pulvérisation de cultures étendues selon la revendication 1, caractérisé en ce que l'installation de transport (12) comprend une pompe et que le produit à pulvériser parvient aux dispositifs de pulvérisation par le biais d'une robinetterie de distribution comprenant un appareil à pression constante.

6. Dispositif (1) pour la pulvérisation de cultures étendues selon la revendication 1, caractérisé en ce que les soupapes (20) sont constituées de soupapes à diaphragme, de soupapes sphériques, à passage direct ou à siège.

7. Dispositif (1) pour la pulvérisation de cultures étendues selon la revendication 1, caractérisé en ce que les dispositifs de pulvérisation (16) peuvent être déplacés par glissement et/ou pivotés et/ou modifiés en ce qui concerne la configuration du jet, le spectre des dimensions de goutte ou la quantité pulvérisée.

8. Dispositif (1) pour la pulvérisation de cultures étendues selon la revendication 1, caractérisé en ce que le centre des cônes de balayage des détecteurs (7) dirigés vers les surfaces de feuillaison (9, 10) des cultures étendues se trouve placé, dans le sens de la marche, un intervalle en amont du centre des cônes de balayage des dispositifs de pulvérisation (16) qui y sont chacun associés.

9. Dispositif (1) pour la pulvérisation de cultures étendues selon la revendication 1, caractérisé en ce que le centre des cônes de balayage des détecteurs (7) dirigés vers les surfaces de feuillaison (9, 10) des cultures étendues se trouve à la même hauteur que le centre des cônes de balayage des dispositifs de pulvérisation (16) qui y sont chacun associés.

10. Dispositif (1) pour la pulvérisation de cultures étendues selon la revendication 1, caractérisé en ce que la direction de balayage des détecteurs (7) dirigés vers les surfaces de feuillaison (9, 10) des cultures étendues est parallèle en toutes directions de l'espace au sens de balayage de chaque dispositif de pulvérisation (16) qui lui est associé.

11. Dispositif (1) pour la pulvérisation de cultures étendues selon la revendication 1, caractérisé en ce que les détecteurs (7) sont montés de manière à pivoter autour d'un axe vertical lorsque les dispositifs de pulvérisation (16) peuvent pivoter autour d'un axe vertical.

12. Dispositif (1) pour la pulvérisation de cultures étendues selon la revendication 1, caractérisé en ce que les châssis (4, 5) sur lesquels sont montés les détecteurs (7) peuvent être déplacés par glissement latéral.

13. Dispositif (1) pour la pulvérisation de cultures étendues selon la revendication 1, caractérisé en ce que les détecteurs (7) sont placés de manière à pouvoir être déplacés par glissement vertical.

14. Dispositif (1) pour la pulvérisation de cultures étendues selon la revendication 1, caractérisé en ce que les détecteurs (7) présentent des zones de balayage des surfaces de feuillaison (9, 10) qui, dans le sens horizontal, ont une largeur de balayage inférieure à celle du plus petit dispositif de pulvérisation (16) utilisable.

15. Dispositif (1) pour la pulvérisation de cultures étendues selon la revendication 1, caractérisé en ce que les détecteurs (7) correspondent, dans l'extension verticale de leurs zones de balayage des surfaces de feuillaison (9, 10), à l'extension verticale de la largeur de rayonnement des dispositifs de pulvérisation (16) utilisables.

16. Dispositif (1) pour la pulvérisation de cultures étendues selon la revendication 1, caractérisé en ce que les détecteurs (7) ayant seulement une extension ponctuelle des zones balayées à la surface de feuillaison (9, 10) recensent celle-ci par sondage aléatoire.

17. Procédé de pulvérisation de cultures étendues placées parallèlement à une section de déplacement, avec un dispositif selon la revendication 1, et comprenant les phases suivantes:
détermination du début de la section de déplacement, entrée dans la section de déplacement d'un véhicule de traction (2),
détermination d'une valeur de référence sur un appareil de mesure de la distance parcourue placé sur le véhicule de traction (2) ou sur la remorque, au début de la section de déplacement,
mesure de la distance parcourue par le véhicule de traction (2) sur la section de déplacement,
mesure de la vitesse du véhicule de traction (2),
émission de signaux optiques perpendiculairement au sens de déplacement par des détecteurs (7) montés à différentes hauteurs sur le véhicule de traction (2),
réception par le détecteur (7) ayant émis le signal de la réflexion sur les surfaces de feuillaison (9, 10) des signaux optiques émis par le détecteur (7),
transmission à un ordinateur des signaux optiques émis et reçus par chaque détecteur (7),
mise en mémoire des signaux optiques émis et reçus par chaque détecteur (7),
évaluation par ordinateur des signaux optiques émis et reçus par chaque détecteur (7) à des intervalles enregistrés par l'appareil de mesure de la distance parcourue,
envoi par l'ordinateur d'instructions d'actionnement à des soupapes (20) qui sont associées à chacun des dispositifs de pulvérisation (16),
transport du produit à pulvériser aux soupapes (16) et pulvérisation des surfaces de feuillaison (9, 10) des cultures étendues recensées par les détecteurs, en fonction des différents états de végétation.

18. Procédé de pulvérisation de cultures étendues selon la revendication 17, caractérisé en ce que l'émission des signaux optiques se fait de manière constante.

19. Procédé de pulvérisation de cultures étendues selon la revendication 17, caractérisé en ce qu'il y a évaluation par ordinateur des signaux optiques émis et reçus par chaque détecteur (7) à des intervalles enregistrés par l'appareil de mesure de la distance parcourue qui ont de préférence quelques centimètres seulement.

20. Procédé de pulvérisation de cultures étendues selon la revendication 17, caractérisé par une mesure incrémentielle de la distance parcourue par le véhicule de traction (2).

21. Procédé de pulvérisation de cultures étendues selon la revendication 17, caractérisé en ce que les signaux optiques émis et reçus par chaque détecteur (7) sont évalués par l'ordinateur qui transmet des instructions d'actionnement à des soupapes (20) asservies individuellement se trouvant à une hauteur variable.

22. Procédé de pulvérisation de cultures étendues selon la revendication 17, caractérisé par un préréglage sur l'ordinateur des paramètres qui permettent une adaptation automatique des instructions d'actionnement envoyées aux soupapes (20) à la taille des "trous" de la surface de feuillaison (9, 10).

23. Procédé de pulvérisation de cultures étendues selon la revendication 17, caractérisé par une adaptation complète des jets de produit à pulvériser en fonction de la vitesse.

24. Procédé de pulvérisation de cultures étendues selon la revendication 17, caractérisé par la fermeture d'un dispositif de pulvérisation (16) seulement lorsqu'un "trou" enregistré par un détecteur à la surface de feuillaison (9, 10) de cultures étendues dépasse une valeur minimale qui peut être entrée dans l'ordinateur et choisie librement.

25. Procédé de pulvérisation de cultures étendues selon la revendication 17, caractérisé par la prise en compte des temps d'ouverture des soupapes.

26. Procédé de pulvérisation de cultures étendues selon la revendication 17, caractérisé par la prise en compte des temps de fermeture des soupapes.

27. Procédé de pulvérisation de cultures étendues selon la revendication 17, caractérisé par l'application d'une quantité plus faible de produit à pulvériser dans une zone marginale d'une surface de feuillaison (9, 10).

28. Procédé de pulvérisation de cultures étendues selon la revendication 17, caractérisé par la coupure automatique des dispositifs de pulvérisation (16) en cas d'arrêt du véhicule de traction (2).

29. Procédé de pulvérisation de cultures étendues selon la revendication 17, caractérisé par une vérification initiale et automatique des détecteurs (7) au moyen d'un contrôle de fonctionnement assisté par logiciel.

30. Procédé de pulvérisation de cultures étendues selon la revendication 17, caractérisé par une ouverture permanente des dispositifs de pulvérisation (16) en cas de panne d'ordinateur.

31. Procédé de pulvérisation de cultures étendues selon la revendication 17, caractérisé par le fait que les détecteurs (7) sont considérés initialement comme défectueux et qu'un détecteur (7) est considéré comme en état de fonctionner quand un détecteur (7) émet et reçoit un signal.

32. Procédé de pulvérisation de cultures étendues selon la revendication 17, caractérisé par le fait qu'on considère les signaux d'un détecteur (7) comme malfonction quand un détecteur supérieur (7) reçoit à plusieurs reprises un signal bien que les détecteurs inférieurs (7) ne reçoivent aucun signal.
